(19) Europäisches Patentamt
European Patent Office
Office européen des brevets

(11) EP 1 936 409 A1

(12) EUROPEAN PATENT APPLICATION

(43) Date of publication:
25.06.2008 Bulletin 2008/26

(51) Int Cl.:
*G02B 5/30* (2006.01) *C08F 255/00* (2006.01)

(21) Application number: 07023284.8

(22) Date of filing: 30.11.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(30) Priority: 22.12.2006 JP 2006345821

(71) Applicant: NITTO DENKO CORPORATION
Ibaraki
Osaka 567-8680 (JP)

(72) Inventors:
- Sugino, Youichirou
Ibaraki,
Osaka 567-8680 (JP)
- Tomoguchi, Naoki
Ibaraki,
Osaka 567-8680 (JP)
- Hani, Tsutomu
Ibaraki,
Osaka 567-8680 (JP)
- Nakahara, Kenji
Ibaraki,
Osaka 567-8680 (JP)
- Nakata, Mie
Ibaraki,
Osaka 567-8680 (JP)

(74) Representative: Koepe, Gerd L.
Koepe & Partner,
Robert-Koch-Strasse 1
80538 München (DE)

# (54) Polarizing plate having an acrylic resin protective layer and a thin adhesive layer

(57) Provided are a polarizing plate which has no defects of unevenness and is excellent in optical characteristics as well as in external appearance, and an image display apparatus of high quality using such a polarizing plate. The polarizing plate of the present invention includes a polarizer and a protective layer (A) placed on one surface of the polarizer, in which the protective layer (A) is a (meth)acrylic resin layer having a thickness of 1 to 50 μm with a surface hardness of B or more in terms of a pencil hardness, and an adhesive layer having a thickness of 50 to 150 nm is placed between the polarizer and the protective layer (A).

FIG. 1

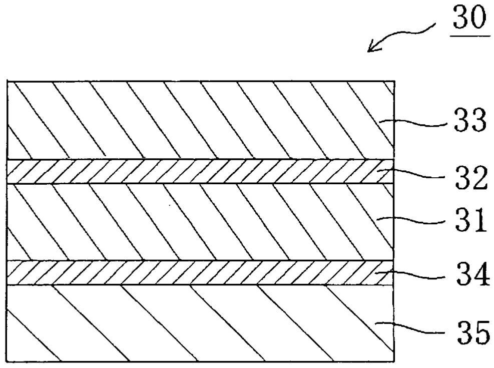


EP 1 936 409 A1

## Description

This application claims priority under 35 U.S.C. Section 119 to Japanese Patent Application No. 2006-345821 filed on December 22, 2006, which is herein incorporated by references.

## BACKGROUND OF THE INVENTION

### 1. Field of the Invention

The present invention relates to a polarizing plate and an image display apparatus such as a liquid crystal display apparatus, an organic EL display apparatus, or a PDP including the at least one polarizing plate described above.

### 2. Description of the Related Art

A liquid crystal display apparatus must have polarizing plates arranged on both sides of a glass substrate forming the surface of a liquid crystal panel due to its image forming system. An example of such a polarizing plate to be used is generally produced by attaching a polarizer protective film on each side of a polarizer made of a polyvinyl alcohol-based film and a dichromatic substance such as iodine by using a polyvinyl alcohol-based adhesive (for example, see JP 2006-220732 A).

For producing a polarizing plate, a polarizer and a polarizer protective film are generally attached to each other with a lamination roll (e.g., see JP 2006-065309 A). At this time, if foreign matter is interposed between the polarizer and the polarizer protective film or between the polarizer protective film and the lamination roll, the foreign matter damages the polarizer during lamination due to the nip pressure of the lamination roll, with the result that defects of unevenness occur.

## SUMMARY OF THE INVENTION

An object of the present invention is to provide (1) a polarizing plate which has no defects of unevenness and is excellent in optical characteristics as well as in external appearance, and (2) an image display apparatus of high quality using such a polarizing plate.

The polarizing plate of the present invention includes a polarizer and a protective layer (A) placed on at least one surface of the polarizer, in which the protective layer (A) is a (meth)acrylic resin layer having a thickness of 1 to 50 μm with a surface hardness of B or more in terms of a pencil hardness, and an adhesive layer having a thickness of 50 to 150 nm is placed between the polarizer and the protective layer (A).

In a preferred embodiment of the present invention, the (meth)acrylic resin layer contains 70 to 100% by weight of a (meth)acrylic resin.

In the preferred embodiment of the present invention, Tg of the (meth)acrylic resin is 115°C to 170°C.

In the preferred embodiment of the present invention, the protective layer (A) is placed on both surfaces of the polarizer.

In the preferred embodiment of the present invention, the adhesive layer is formed of a polyvinyl alcohol-based adhesive.

In the preferred embodiment of the present invention, the polarizer and the protective layer (A) are attached to each other with a lamination roll.

In the preferred embodiment of the present invention, the polarizing plate further includes as at least one of an outermost layer a pressure-sensitive adhesive layer.

According to another aspect of the present invention, an image display apparatus is provided. The image display apparatus of the present invention includes at least one polarizing plate of the present invention.

According to the present invention, a polarizing plate can be provided, which has no defects of unevenness and is excellent in optical characteristics as well as in external appearance, and an image display apparatus of high quality using such a polarizing plate can be provided.

Such an effect can be expressed by placing a polarizer and a protective layer made of a specific material having a specific surface hardness and a specific thickness via an adhesive layer having a specific thickness, thereby constituting a polarizing plate.

## BRIEF DESCRIPTION OF THE DRAWINGS

In the accompanying drawings:

FIG. 1 is a cross-sectional view showing an example of a polarizing plate of the present invention; and
FIG. 2 is a schematic cross-sectional view of a liquid crystal display apparatus according to a preferred embodiment of the present invention.

## DESCRIPTION OF THE PREFERRED EMBODIMENTS

Hereinafter, preferred embodiments of the present invention will be described, but the present invention is not limited thereto.

In this specification, an in-plane refractive index in a slow axis direction and an in-plane refractive index in a fast axis direction are defined as nx and ny, respectively, and a thickness direction refractive index is defined as nz. The slow axis direction denotes a direction in which an in-plane refractive index becomes maximum.

In this specification, for example, ny = nz includes not only the case where ny and nz are completely identical, but also the case where ny and nz are substantially identical.

In this specification, an in-plane retardation Re can be obtained by an equation: $Re=(nx-ny)\times d$, where d (nm) is a thickness of an optical element (transparent substrate, etc.).

In this specification, a thickness direction retardation Rth can be obtained by an equation: $Rth=(nx-nz)\times d$, where d(nm) is a thickness of an optical element (transparent substrate, etc.).

(Polarizer)

A polarizer is formed of a polyvinyl alcohol-based resin. The polarizer is obtained by dying a polyvinyl alcohol-based resin film with a dichromatic material (typically, iodine and a dichromatic dye), followed by uniaxial stretching. The degree of polymerization of the polyvinyl alcohol-based resin constituting the polyvinyl alcohol-based resin film is preferably 100 to 5,000, and more preferably 1,400 to 4,000.

The polyvinyl alcohol-based resin film constituting the polarizer can be formed by any appropriate method (e.g., a flow casting method of flow-casting a solution in which a resin is dissolved in water or an organic solvent to make a film, a casting method, and an extrusion method). The thickness of the polarizer can be appropriately set in accordance with the purpose and application of an LCD in which a polarizing plate is used, and is typically 5 to 80 μm.

For producing a polarizer, any appropriate method may be employed in accordance with the purpose, materials to be used, conditions, and the like. Typically, employed is a method in which the polyvinyl alcohol-based resin film is subjected to a series of production steps including swelling, coloring, crosslinking, stretching, water washing, and drying steps. In each of the treatment steps excluding the drying step, the polyvinyl alcohol-based resin film is immersed in a bath containing a solution to be used in each step. The order, number of times, and absence or presence of swelling, coloring, crosslinking, stretching, water washing, and drying steps may be appropriately set in accordance with the purpose, materials to be used, conditions, and the like. For example, several treatments may be conducted at the same time in one step, or specific treatments may be omitted. More specifically, stretching treatment, for example, may be conducted after coloring treatment, before coloring treatment, or at the same time as swelling treatment, coloring treatment, and crosslinking treatment. Further, for example, crosslinking treatment is preferably conducted before and/or after stretching treatment. Further, for example, water washing treatment may be conducted after each treatment or only after specific treatments.

The swelling step is typically conducted by immersing the polyvinyl alcohol-based resin film in a treatment bath (swelling bath) filled with water. This treatment allows washing away of contaminants from a surface of the polyvinyl alcohol-based resin film, washing away of an anti-blocking agent, and swelling of the polyvinyl alcohol-based resin film, to thereby prevent non-uniformity such as uneven coloring. The swelling bath may appropriately contain glycerin, potassium iodide, or the like. The temperature of the swelling bath is typically about 20 to 60°C, and the immersion time in the swelling bath is typically about 0.1 to 10 minutes.

The coloring step is typically conducted by immersing the polyvinyl alcohol-based resin film in a treatment bath (coloring bath) containing a dichromatic substance such as iodine. As a solvent to be used for a solution of the coloring bath, water is generally used, but an appropriate amount of an organic solvent having compatibility with water may be added. The dichromatic substance is typically used in a ratio of 0.1 to 1.0 part by weight with respect to 100 parts by weight of the solvent. In a case where iodine is used as a dichromatic substance, the solution of the coloring bath preferably further contains an assistant such as an iodide for improving a coloring efficiency. The assistant is used in a ratio of preferably 0.02 to 20 parts by weight, and more preferably 2 to 10 parts by weight with respect to 100 parts by weight of the solvent. Specific examples of the iodide include potassium iodide, lithium iodide, sodium iodide, zinc iodide, aluminum iodide, lead iodide, copper iodide, barium iodide, calcium iodide, tin iodide, and titanium iodide. The temperature of the coloring bath is typically about 20 to 70°C, and the immersion time in the coloring bath is typically about 1 to 20 minutes.

The crosslinking step is typically conducted by immersing in a treatment bath (crosslinking bath) containing a

crosslinking agent the polyvinyl alcohol-based resin film that has undergone the coloring treatment. The crosslinking agent employed may be any appropriate crosslinking agent. Specific examples of the crosslinking agent include: a boron compound such as boric acid or borax; glyoxal; and glutaraldehyde. The crosslinking agent may be used alone or in combination. As a solvent to be used for a solution of the crosslinking bath, water is generally used, but an appropriate amount of an organic solvent having compatibility with water may be added. The crosslinking agent is typically used in a ratio of 1 to 10 parts by weight with respect to 100 parts by weight of the solvent. In a case where a concentration of the crosslinking agent is less than 1 part by weight, sufficient optical properties are often not obtained. In a case where the concentration of the crosslinking agent is more than 10 parts by weight, stretching force to be generated on the film during stretching increases and a polarizing plate to be obtained may shrink. The solution of the crosslinking bath preferably further contains an assistant such as an iodide for obtaining uniform properties in the same plane. The concentration of the assistant is preferably 0.05 to 15 wt%, and more preferably 0.5 to 8 wt%. Specific examples of the iodide are the same as in the case of the coloring step. The temperature of the crosslinking bath is typically about 20 to 70°C, and preferably 40 to 60°C. The immersion time in the crosslinking bath is typically about 1 second to 15 minutes, and preferably 5 seconds to 10 minutes.

The stretching step may be conducted at any stage as described above. Specifically, the stretching step may be conducted after the coloring treatment, before the coloring treatment, at the same time as the swelling treatment, the coloring treatment, and the crosslinking treatment, or after the crosslinking treatment. A cumulative stretching ratio of the polyvinyl alcohol-based resin film needs to be 5 times or more, preferably 5 to 7 times, and more preferably 5 to 6.5 times. In a case where the cumulative stretching ratio is less than 5 times, a polarizing plate having a high degree of polarization may be hard to obtain. In a case where the cumulative stretching ratio is more than 7 times, the polyvinyl alcohol-based resin film (polarizer) may easily break. A specific method of stretching employed may be any appropriate method. For example, in a case where a wet stretching method is employed, a polyvinyl alcohol-based resin film is stretched in a treatment bath (stretching bath) to a predetermined ratio. A solution of the stretching bath to be preferably used is a solution in which various metal salts or compounds of iodine, boron, or zinc are added to a solvent such as water or an organic solvent (such as ethanol).

The water washing step is typically conduced by immersing in a treatment bath (water washing bath) the polyvinyl alcohol-based resin film that has undergone the various treatments. The water washing step allows washing away of unnecessary remains from the polyvinyl alcohol-based resin film. The water washing bath may contain pure water or an aqueous solution containing iodide (such as potassium iodide or sodium iodide). The concentration of an aqueous iodide solution is preferably 0.1 to 10 weight%. The aqueous iodide solution may contain an assistant such as zinc sulfate or zinc chloride. The temperature of the water washing bath is preferably 10 to 60°C, and more preferably 30 to 40°C, and the immersion time is typically 1 second to 1 minute. The water washing step may be conducted only once, or may be conducted a plurality of times as required. In a case where the water washing step is conducted a plurality of times, the kind and concentration of the additive contained in the water washing bath to be used for each treatment may be appropriately adjusted. For example, the water washing step includes a step of immersing a polymer film in an aqueous potassium iodide solution (0.1 to 10 weight%, 10 to 60°C) for 1 second to 1 minute and a step of washing the polymer film with pure water.

The drying step may employ any appropriate drying method (such as natural drying, air drying, or heat drying). For example, in heat drying, a drying temperature is typically 20 to 80°C, and a drying time is typically 1 to 10 minutes. In the manner as described above, the polarizer is obtained.

(Protective layer (A))

A protective layer (A) used in the present invention is a (meth)acrylic resin layer. The (meth)acrylic resin layer contains a (meth)acrylic resin as a main component. In this specification, the (meth)acrylic resin denotes an acrylic resin or a methacrylic resin.

The content ratio of the (meth)acrylic resin in the (meth)acrylic resin layer is preferably 70 to 100% by weight, more preferably 80 to 100% by weight, much more preferably 90 to 100% by weight, particularly preferably 95 to 100% by weight, and most preferably 100% by weight.

Tg (glass transition temperature) of the (meth)acrylic resin is preferably 115°C or more, more preferably 120°C or more, much more preferably 125°C or more, and particularly preferably 130°C or more. The (meth)acrylic resin having a Tg (glass transition temperature) of 115°C or more can be excellent in durability. The upper limit value of Tg of the above (meth)acrylic is not particularly limited, but is preferably 170°C or less in terms of formability and the like.

As the (meth)acrylic resin, any appropriate (meth)acrylic resin can be adopted as long as the effects of the present invention are not impaired. Examples of the (meth)acrylic resin include a poly(meth)acrylates such as methyl polymethacrylate, a methyl methacrylate-(meth)acrylic acid copolymer, a methyl methacrylate-(meth)acrylate copolymer, a methyl methacrylate-acrylate-(meth)acrylic acid copolymer, a methyl (meth)acrylate-styrene copolymer (MS resin, etc.), a polymer having an alicyclic hydrocarbon group (e.g., a methyl metharylate-cyclohexyl methacrylate copolymer,

a methyl methacrylate-norbornyl (meth)acrylate copolymer). A preferred example includes $C_{1-6}$ alkyl poly(meth)acryic acid such as polymethyl (meth)acrylate. A more preferred example includes methyl methacrylate-based resin containing methyl methacrylate as a main component (50 to 100% by weight, preferably 70 to 100% by weight).

Specific examples of the (meth)acrylic resin include ACRYPET VH and ACRYPET VRL20A manufactured by Mitsubishi Rayon Co.,Ltd., a (meth)acrylic resin having a ring structure in molecules described in JP 2004-70296 A, and a (meth)acrylic resin with a high Tg obtained by intramolecular cross-linking or intramolecular cyclization reaction.

As the (meth)acrylic resin, a (meth)acrylic resin having a lactone ring structure can also be used. This is because the (meth)acrylic resin having a lactone ring structure has high heat resistance, high transparency, and high mechanical strength.

Examples of the (meth)acrylic resin having a lactone ring structure include (meth)acrylic resins having a lactone ring structure described in JP 2000-230016 A, JP 2001-151814 A, JP 2002-120326 A, JP 2002-254544 A, and JP 2005-146084 A.

The (meth)acrylic resin having a lactone ring structure preferably has a lactone ring structure represented by the following General Formula (1).

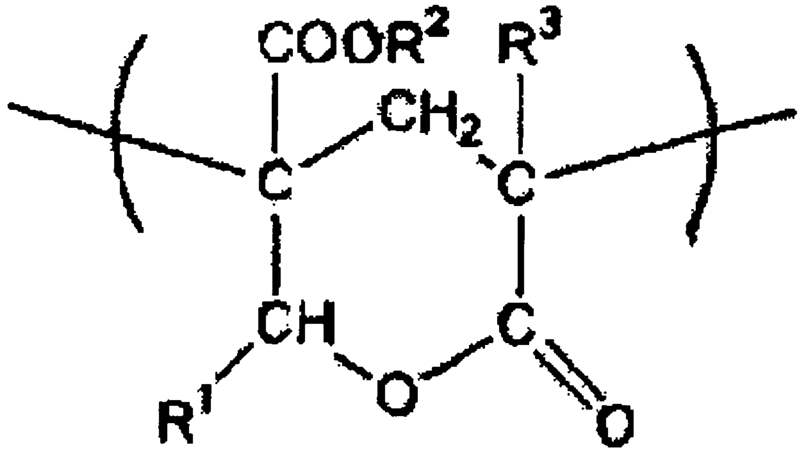

(1)

(In General Formula (1), each of $R^1$, $R^2$, and $R^3$ independently represents a hydrogen atom or an organic residue containing 1 to 20 carbon atoms. The organic residue may contain oxygen atoms.)

The content ratio of the lactone ring structure represented by General Formula (1) in a structure of a (meth) acrylic resin having a lactone ring structure is preferably 5 to 90% by weight, more preferably 10 to 70% by weight, much more preferably 10 to 60% by weight, and particularly preferably 10 to 50% by weight. When the content ratio of the lactone ring structure represented by General Formula (1) in the structure of the (meth)acrylic resin having a lactone ring structure is less than 5% by weight, there is a possibility that heat resistance, solvent resistance, and surface hardness may become insufficient. When the content ratio of the lactone ring structure represented by General Formula (1) in the structure of the (meth)acrylic resin having a lactone ring structure is more than 90% by weight, there is a possibility that a forming processing property may become poor.

The weight average molecular weight of the (meth)acrylic resin having a lactone ring structure is preferably 1,000 to 2,000,000, more preferably 5,000 to 1,000,000, much more preferably 10,000 to 500,000, and particularly preferably 50,000 to 500,000. When the weight average molecular weight is out of the above range, there is a possibility that the effects of the present invention may not be exhibited sufficiently.

The Tg (glass transition temperature) of the (meth)acrylic resin having a lactone ring structure is preferably 115°C or more, more preferably 125°C or more, much more preferably 130°C or more, particularly preferably 135°C or more, and most preferably 140°C or more. When the (meth)acrylic resin having a lactone ring structure having a Tg of 115°C or more is incorporated in a polarizing plate, for example, as a polarizer protective film, the resultant film can be excellent in durability. The upper limit value of the Tg of the above (meth)acrylic resin having a lactone ring structure is not particularly limited, but is preferably 170°C or less in terms of formability and the like.

Regarding the (meth)acrylic resin having a lactone ring structure, the total light beam transmittance of a molding obtained by injection molding measured by a method in accordance with ASTM-D-1003 is preferably as high as possible, and is preferably 85% or more, more preferably 88% or more, and much more preferably 90% or more. When the total light beam transmittance, which is a standard of transparency, is less than 85%, there is a possibility that transparency may decrease.

The thickness of the protective layer (A) of the present invention is 1 to 50 μm, preferably 10 to 50 μm, and more preferably 20 to 40 μm. When the polarizer and the protective layer (A) having a thickness in the above range are attached to each other with a lamination roll, even if foreign matter is interposed between the polarizer and the protective layer (A) or between the protective layer (A) and the lamination roll, the occurrence of the defects of unevenness caused by the nip pressure of the lamination roll can be prevented.

The protective layer (A) of the present invention has a surface hardness of B or more in terms of a pencil hardness. When the polarizer and the protective layer (A) having a surface hardness of B or more in terms of a pencil hardness are attached to each other with a lamination roll, even if foreign matter is interposed between the polarizer and the protective layer (A) or between the protective layer (A) and the lamination roll, the occurrence of the defects of unevenness caused by the nip pressure of the lamination roll can be prevented. The above pencil hardness can be measured in accordance with JIS 5600.

As a method of setting the surface hardness of the protective layer (A) of the present invention to be B or more in terms of a pencil hardness, any appropriate method can be adopted. For example, there are a method of adopting the above-mentioned (meth)acrylic resin having a lactone ring structure as a (meth)acrylic resin constituting the protective layer (A) and adjusting the content ratio of the ring structure, and a method of enhancing the crystallinity of a (meth) acrylic resin constituting the protective layer (A). A method of adopting the above-mentioned (meth)acrylic resin having a lactone ring structure as a (meth)acrylic resin constituting the protective layer (A) and adjusting the content ratio of the ring structure is preferred.

(Another protective layer)

According to the present invention, the protective layer (A) may be placed on at least one surface of a polarizer. More specifically, the protective layer (A) may be placed on both surfaces of the polarizer, or the protective layer (A) may be placed on one surface of the polarizer and another protective layer may be placed on the other surface thereof. As another protective layer, any appropriate transparent substrate can be adopted as long as it can constitute a polarizing plate when being attached to a polarizer. The transparent substrate may be composed of only one layer or may be an laminate of at least two layers. The thickness of the transparent substrate can be appropriately set in accordance with the purpose. The thickness of the transparent substrate is typically 500 μm or less, preferably 5 to 300 μm, and more preferably 10 to 150 μm.

Examples of the material constituting the transparent substrate include thermoplastic resins excellent in transparency, mechanical strength, thermal stability, a water proofing property, isotropy, and the like. Specific examples of the thermoplastic resin include a cellulose-based resin such as triacetylcellulose (TAC), a polyeseter resin, a polyether sulfone resin, a polysulfone resin, a polycarbonate resin, a polyamide resin, a polyimide resin, a polyolefin resin, a (meth) acrylic resin, a norbornene resin, a polyarylate resin, a polystyrene resin, a polyvinyl alcohol resin, and a mixture thereof. Further, for example, (meth)acrylic, urethane-based, acrylurethane-based, epoxy-based, or silicone-based thermosetting resins or UV-curable resins can also be used. A cellulose-based resin and/or a norbornene-based resin are particularly preferred.

For example, a polymer film formed of a resin composition described in JP 2001-343529 A (WO 01/37007) can be used as a transparent substrate. More specifically, such a polymer film is a mixture of a thermoplastic resin having a substituted imide group or a non-substituted imide group on a side chain, and a thermoplastic resin having a substituted phenyl group or a non-substituted phenyl group and a cyano group on a side chain. A specific example thereof includes a resin composition having an alternate copolymer made of isobutene and N-methylenemaleimide and an acrylonitrile/styrene copolymer. For example, an extruded molding of such a resin composition can be used.

As one preferred specific example of the transparent substrate, there is a cellulose-based resin. An ester of cellulose and aliphatic acid is preferred. Specific examples of such a cellulose-based resin include cellulose triacetate (triacetylcellulose: TAC), cellulose diacetate, cellulose tripropionate, and cellulose dipropionate. Cellulose triacetate (triacetylcellulose: TAC) is particularly preferred. This is because cellulose triacetate has a low birefringence and a high transmittance. TAC is commercially available as a number of products, and is advantageous in terms of easy availability and cost. Specific examples of the commercially available products of TAC include "UV-50," "UV-80," "SH-50," "SH-80," "TD-80U," "TD-TAC," and "UZ-TAC" (trade name) manufacture by Fujiphoto film Co., Ltd., "KC series" (trade name) manufactured by Konica Minolta Co., Ltd., and "Cellulose triacetate 80 μm series" (trade name) manufactured by Lonza Japan Ltd.

As one preferred specific example of the transparent substrate, there is a transparent film having a small thickness direction retardation (Rth). More specifically, Rth is preferably 10 nm or less, more preferably 6 nm or less, and much more preferably 3 nm or less. The lower limit value of Rth is preferably 0 nm or more, and more preferably more than 0 nm. It is preferred that a transparent film having small Rth have a small in-plane retardation (Re). Re is preferably 2 nm or less, and more preferably 1 nm or less. The lower limit value of Re is preferably 0 nm or more, and more preferably more than 0 nm. As a transparent film having small Rth, any appropriate material can be adopted.

Examples of the material include a cellulose-based resin and a norbornene-based resin. As the cellulose-based resin, there are preferably aliphatic acid substituted cellulose-based polymers such as diacetyl cellulose and triacetyl cellulose. Such a transparent film having small Rth can be preferably obtained by performing appropriate treatment for decreasing Rth with respect to a cellulose-based film having large Rth.

As the treatment for decreasing Rth, any appropriate treatment method can be adopted. For example, there are a method of attaching a substrate film made of polyethylene terephthalate, polypropylene, stainless, or the like, onto which a solvent of cyclopentanone, methyl ethyl ketone, or the like is applied to a general cellulose-based film, followed by heat drying (e.g., about 80°C to 150°C for about 3 to 10 minutes), and thereafter, peeling the substrate film; a method of applying a solution in which a norbornene-based resin, a (meth)acrylic resin, or the like is dissolved in a solvent of cyclopentanone, methyl ethyl ketone, or the like to a general cellulose-based film, followed by heat drying (e.g., about 80°C to 150°C for 3 to 10 minutes), and thereafter, peeling the coating film; and the like.

As the material for the above-mentioned transparent film having small Rth, an aliphatic acid substituted cellulose-based polymer with the controlled substitution degree of aliphatic acid can be used. In triacetyl cellulose which is generally used, the substitution degree of acetic acid is about 2.8, but Rth can be preferably controlled to be small by controlling the substitution degree of acetic acid to be 1.8 to 2.7, and more preferably by controlling the substitution degree of propionic acid to be 0.1 to 1. By adding a plasticizer such as dibutylphthalate, p-toluenesulfonanilide, or acetyltriethyl citrate to the above aliphatic acid substituted cellulose-based polymer, Rth can be controlled to be small. The adding amount of a plasticizer is preferably 40 parts by weight or less, more preferably 1 to 20 parts by weight, and more preferably 1 to 15 parts by weight with respect to 100 parts by weight of the aliphatic acid substituted cellulose-based polymer.

The technologies for controlling Rth to be small as described above may be appropriately combined.

As another preferred specific example of the transparent substrate, there is a cyclic olefin-based resin. A norbornene-based resin is specifically preferred. The cyclic olefin-based resin is a generic name of a resin polymerized with a cyclic olefin being a polymerization unit. Examples of the cyclic olefin-based resin include those described in JP 1-240517 A, JP 3-14882 A, and JP 3-122137 A. Specific examples include a ring-opening (co)polymer of cyclic olefin, an addition polymer of cyclic olefin, a copolymer of cyclic olefin and $\alpha$-olefin such as ethylene or propylene (typically, a random copolymer), a graft denatured product obtained by denaturing the above polymers with unsaturated carboxylic acid or a derivative thereof, and a hydride thereof. As a specific example of cyclic olefin, there is a norbornene-based monomer.

Examples of the above norbornene-based monomer include norbornene, and alkyl and/or an alkylidene substitute thereof, e.g., 5-methyl-2-norbomene, 5-dimethyl-2-norbornene, 5-ethyl-2-norbornene, 5-butyl-2-norbornene, and 5-ethylidene-2-norbornene, and a polar group substitute thereof with halogen or the like; dicyclopentadiene and 2,3-dihydrodicyclopentadiene; and dimethanooctahydronaphthalene, alkyl and/or alkylidene substitute thereof, and a polar group substitute thereof with halogen or the like, e.g., 6-methyl-1,4:5,8-dimethano-1,4,4a,5,6,7,8,8a-octahydronaphthalene, 6-ethyl-1,4:5,8-dimethano-1,4,4a,5,6,7,8,8a-octahydronaphthalene, 6-ethylidene-1,4:5,8-dimethano-1,4,4a,5,6,7,8,8a-octahydronaphthalene, 6-chloro-1,4:5,8 dimethano-1,4,4a,5,6,7,8,8a-octahydronaphthalene, 6-cyano-1,4:5,8-dimethano-1,4,4a,5,6,7,8,8a-octahydronaphthalene, 6-pyridyl-1,4:5,8-dimethano-1,4,4a,5,6,7,8,8a-octahydronaphthalene, 6-methoxycarbonyl-1,4:5,8-dimetano-1,4,4a,5,6,7,8,8a-octahydronaphthalene; a trimer or tetramer of cyclopentadiene, e.g., 4,9:5,8-dimetano-3a,4,4a,5,8,8a,9,9a-octahydro-IH-benzoindene,4,11:5,10:6,9-trimethano-3a,4,4a,5,5a,6,9,9a,10, 10a,11,11a-dodecahydro-1H-cyclopentaanthracene.

The above norbornene-based monomer may be used together with another cycloolefins capable of being ring-opening polymerized in a range not impairing the object of the present invention. Specific examples of such cycloolefin include compounds having one reactive double-bond, such as cyclopentene, cyclooctene, and 5,6-dihydrodicyclopentadiene.

The number-average molecular weight (Mn) measured by a gel permeation chromatograph (GPC) method of the cyclic olefin-based resin with a toluene solvent is preferably 25,000 to 200,000, more preferably 30,000 to 100,000, and most preferably 40,000 to 80,000. If the number-average molecular weight is in the above range, the resultant transparent substrate has excellent mechanical strength, solubility, formability, and flow casting operability.

In the case where the cyclic olefin-based resin is obtained by hydrogenateing a ring-opening polymer of a norbornene-based monomer, the hydrogenation ratio is preferably 90% or more, more preferably 95% or more, and most preferably 99% or more. In this range, the cyclic olefin-based resin is excellent in heat aging resistance and light aging resistance.

As the cyclic olefin-based resin, various products are commercially available. Specific examples include "ZEONEX" and "ZEONOA" (trade name) manufactured by ZEON Corporation; "Arton" (trade name) manufactured By JSR; "TOPAS" (trade name) manufactured by TICONA; and "APEL" (trade name) manufactured by Mitsui Chemicals Inc.

(Polarizing plate)

The polarizing plate of the present invention includes the above polarizer and the above protective layer (A) placed on at least one surface of the polarizer. More specifically, the above protective layer (A) may be placed on both surfaces of the above polarizer, or the above protective layer (A) may be placed on one surface of the above polarizer and another protective layer may be placed on the another surface of the polarizer.

The polarizing plate of the present invention includes an adhesive layer with a thickness of 50 to 150 nm between the above polarizer and the above protective layer (A). The thickness of the adhesive layer is preferably 70 to 150 nm, and more preferably 90 to 130 nm. Due to the thickness of the adhesive layer in the above range, when the polarizer and the protective layer (A) are attached to each other with a lamination roll, even if foreign matter is interposed between the polarizer and the protective layer (A) or between the protective layer (A) and the lamination roll, the occurrence of the defects of unevenness caused by the nip pressure of the lamination roll can be prevented.

The above adhesive layer is preferably a water-soluble adhesive layer, and more preferably a layer formed of a polyvinyl alcohol-based adhesive. The polyvinyl alcohol-based adhesive preferably contains a polyvinyl alcohol-based resin and a cross-linking agent.

Examples of the aforementioned polyvinyl alcohol-based resin include, but not limited to: a polyvinyl alcohol obtained by saponifying polyvinyl acetate; derivatives thereof; a saponified product of a copolymer obtained by copolymerizing vinyl acetate with a monomer having copolymerizability with vinyl acetate; and a modified polyvinyl alcohol obtained by modifying polyvinyl alcohol to acetal, urethane, ether, graft polymer, phosphate, or the like. Examples of the monomer include: unsaturated carboxylic acids such as maleic anhydrides or maleic acid, fumaric acid, crotonic acid, itaconic acid, and (meth)acrylic acid and esters thereof; $\alpha$-olefin such as ethylene and propylene; (sodium) (meth) allylsulfonate; sodium sulfonate (monoalkylmalate); sodium disulfonate alkylmalate; N-methylol acrylamide; alkali salts of acrylamide alkylsulfonate; N-vinylpyrrolidone; and derivatives of N-vinylpyrrolidone. The polyvinyl alcohol-based resins may be used alone or in combination.

In terms of adhesiveness, the polyvinyl alcohol-based resin has an average degree of polymerization of preferably 100 to 3,000, and more preferably 500 to 3,000, and an average degree of saponification of preferably 85 to 100 mol%, and more preferably 90 to 100 mol%.

A polyvinyl alcohol-based resin having an acetoacetyl group may be used as the aforementioned polyvinyl alcohol-based resin. The polyvinyl alcohol-based resin having an acetoacetyl group is a polyvinyl alcohol-based adhesive having a highly reactive functional group and is preferred from the viewpoint of improving durability of a polarizing plate.

The polyvinyl alcohol-based resin having an acetoacetyl group can be obtained in a reaction between the polyvinyl alcohol-based resin and diketene through a known method. Examples of the known method include: a method involving dispersing the polyvinyl alcohol-based resin in a solvent such as acetic acid, and adding diketene thereto; and a method involving dissolving the polyvinyl alcohol-based resin in a solvent such as dimethylformamide or dioxane, in advance, and adding diketene thereto. Another example of the known method is a method involving directly bringing diketene gas or a liquid diketene into contact with polyvinyl alcohol.

A degree of acetoacetyl modification of the polyvinyl alcohol-based resin having an acetoacetyl group is not particularly limited as long as it is 0.1 mol% or more. A degree of acetoacetyl modification of less than 0.1 mol% provides insufficient water resistance with the adhesive layer and is inappropriate. The degree of acetoacetyl modification is preferably 0.1 to 40 mol%, and more preferably 1 to 20 mol%. A degree of acetoacetyl modification of more than 40 mol% decreases the number of reaction sites with a crosslinking agent and provides a small effect of improving the water resistance. The degree of acetoacetyl modification is a value measured by NMR.

As the above cross-linking agent, those which are used in a polyvinyl alcohol-based adhesive can be used without any particular limit. A compound having at least two functional groups each having reactivity with a polyvinyl alcohol-based resin can be used as the crosslinking agent. Examples of the compound include: alkylene diamines having an alkylene group and two amino groups such as ethylene diamine, triethylene diamine, and hexamethylene dimamine (of those, hexamethylene diamine is preferred); isocyanates such as tolylene diisocyanate, hydrogenated tolylene diisocyanate, a trimethylene propane tolylene diisocyanate adduct, triphenylmethane triisocyanate, methylene bis(4-phenylmethane)triisocyanate, isophorone diisocyanate, and ketoxime blocked compounds and phenol blocked compounds thereof; epoxides such as ethylene glycol diglycidyl ether, polyethylene glycol diglycidyl ether, glycerin di- or triglycidyl ether, 1,6-hexane diol diglycidyl ether, trimethylol propane triglycidyl ether, diglycidyl aniline, and diglycidyl amine; monoaldehydes such as formaldehyde, acetaldehyde, propione aldehyde, and butyl aldehyde; dialdehydes such as glyoxal, malondialdehyde, succinedialdehyde, glutardialdehyde, maleic dialdehyde, and phthaldialdehyde; an amino-formaldehyde resin such as a condensate of formaldehyde with methylol urea, methylol melamine, alkylated methylol urea, alkylated methylol melamine, acetguanamine, or benzoguanamine; and sodium, potassium, divalent metals such as magnesium, calcium, aluminum, iron, and nickel or salts of trivalent metals and oxides thereof. A melamine-based crosslinking agent is preferred as the crosslinking agent, and methylolmelamine is particularly preferred.

A mixing amount of the crosslinking agent is preferably 0.1 to 35 parts by weight, and more preferably 10 to

25 parts by weight with respect to 100 parts by weight of the polyvinyl alcohol-based resin. Meanwhile, for improving the durability, the crosslinking agent may be mixed within a range of more than 30 parts by weight and 46 parts by weight or less with respect to 100 parts by weight of the polyvinyl alcohol-based resin. In particular, in a case where the polyvinyl alcohol-based resin having an acetoacetyl group is used, the crosslinking agent is preferably used in an amount of more than 30 parts by weight. The crosslinking agent is mixed within a range of more than 30 parts by weight and 46 parts by weight or less, to thereby improve the water resistance.

In the above polyvinyl alcohol-based adhesive, coupling agents such as a silane coupling agent and a titanium coupling agent, various kinds of tackifiers, a UV-absorber, an antioxidant, stabilizers such as a heat-resistant stabilizer and a hydrolysis-resistant stabilizer, and the like can also be compounded.

As a method of producing a polarizing plate of the present invention, any appropriate method can be adopted. Preferably, the above protective layer (A) is attached to both sides of the above polarizer with the above adhesive, or the above protective layer (A) is attached to one surface of the above polarizer with the above adhesive, and another protective layer is attached to the other surface of the polarizer with the above adhesive.

For the above attachment, any appropriate method can be adopted. Preferably, a lamination roll is used. A drying step may be performed after attachment. The drying temperature and drying time are appropriately determined depending upon the kind of an adhesive.

In one preferred embodiment of the polarizing plate of the present invention, as shown in FIG **1,** one surface of a polarizer **31** is bonded to a protective layer (A) **33** via an adhesive layer **32,** and the other surface of the polarizer **31** is bonded to a protective layer (A) **35** via an adhesive layer **34.** Other protective layers may be used in place of the protective layer (A) **35.** In the case where the protective layer (A) is placed on both surfaces of the polarizer **31,** the two protective layers (A) may be the identical kind of a protective layer (A) or different kinds of protective layers (A).

The polarizing plate according to the present invention may have a pressure-sensitive adhesive layer as at least one of an outermost layer (such a polarizing plate may be referred to as polarizing plate of a pressure-sensitive adhesion type).

The pressure-sensitive adhesive forming the aforementioned pressure-sensitive adhesive layer is not particularly limited. However, for example, a pressure-sensitive adhesive containing as a base polymer an acrylic polymer, a silicone-based polymer, polyester, polyurethane, polyamide, polyether, fluorine-based polymer, or rubber-based polymer can be appropriately selected to be used. In particular, a pressure-sensitive adhesive such as an acrylic pressure-sensitive adhesive is preferably used, which is excellent in optical transparency, exhibits appropriate wettability and pressure-sensitive adhesion properties of a cohesive property and an adhesive property, and is excellent in weather resistance and heat resistance. In particular, an acrylic pressure-sensitive adhesive made of an acrylic polymer containing 4 to 12 carbon atoms is preferred.

In addition to the above, in terms of the prevention of a foaming phenomenon and a peeling phenomenon caused by moisture absorption, the prevention of a degradation in optical properties and bending of a liquid crystal cell caused by thermal expansion difference or the like, and the formation property of a liquid crystal display apparatus which is of high quality and has excellent durability, a pressure-sensitive adhesive layer having a low moisture absorbing ratio and excellent heat resistance is preferred.

The aforementioned pressure-sensitive adhesive layer may contain, for example, additives to be added to the pressure-sensitive adhesive layer, such as resins of a natural substance or a synthetic substance, in particular, a tackifying resin, a filler such as glass fibers, glass beads, metal powder, or other inorganic powders, a pigment, a colorant, and an antioxidant.

A pressure-sensitive adhesive layer that contains fine particles and exhibits a light diffusion property or the like may be used.

The aforementioned pressure-sensitive adhesive layer can be provided by any appropriate method. Examples thereof include a method of preparing a pressure-sensitive adhesive solution in an amount of about 10 to 40% by weight in which a base polymer or a composition thereof is dissolved or dispersed in any appropriate single solvent such as toluene or ethyl acetate or a solvent made of a mixture, and directly applying the pressure-sensitive adhesive solution onto a polarizing plate or an optical film by any appropriate development method such as a flow casting method or a coating method, or forming a pressure-sensitive adhesive layer on a separator according to the above, and transferring the pressure-sensitive adhesive layer to the polarizer protective film surface.

The pressure-sensitive adhesive layer may also be provided on one surface or both surfaces of a polarizing plate as superimposed layers of different compositions, different kinds, or the like. In a case of providing the pressure-sensitive adhesive layer on both surfaces of the polarizing plate, pressure-sensitive adhesive layers on front and reverse surfaces of the polarizing plate can have different compositions, kinds, thicknesses, and the like.

The thickness of the pressure-sensitive adhesive layer can be appropriately determined in accordance with the use purpose and the adhesive strength, and preferably 1 to 40 $\mu$m, more preferably 5 to 30 $\mu$m, and particularly preferably 10 to 25 $\mu$m. When the thickness of the pressure-sensitive adhesive layer is smaller than 1 $\mu$m, durability of the layer degrades. When the thickness of the pressure-sensitive adhesive layer is larger than 40 $\mu$m, floats and peeling

are likely to occur due to foaming or the like, resulting in an unsatisfactory outer appearance.

According to the present invention, the polarizer, the protective layer, and the like forming the above polarizing plate, and each layer such as the pressure-sensitive adhesive layer may be provided with UV-absorbing ability by a treatment with a UV-absorber such as a salicylate-based compound, a benzophenol-based compound, a benzotriazole-based compound, a cyanoacrylate-based compound, or a nickel complex salt-based compound.

The polarizing plate of the present invention may be provided on either side of a viewer side and a backlight side of a liquid crystal cell, or on both sides thereof without any limit.

(Image display apparatus)

Next, an image display apparatus of the present invention will be described. The image display apparatus of the present invention includes at least one polarizing plate of the present invention. Herein, as one example, a liquid crystal display apparatus will be described. However, it is needless to say that the present invention is applicable to any display apparatus requiring a polarizing plate. Specific examples of the image display apparatus to which the polarizing plate of the present invention is applicable include a self-emitting display apparatus such as an electroluminescence (EL) display, a plasma display (PD), and a field emission display (FED). FIG. **2** is a schematic cross-sectional view of a liquid crystal display apparatus according to a preferred embodiment of the present invention. In the illustrated example, a transmission-type liquid crystal display apparatus will be described. However, it is needless to say that the present invention is also applicable to a reflection-type liquid crystal display apparatus or the like.

A liquid crystal display apparatus **100** includes a liquid crystal cell **10,** retardation films **20, 20'** placed so as to interpose the liquid crystal cell **10** therebetween, polarizing plates **30, 30'** placed on outer sides of the retardation films **20, 20',** a light guide plate **40,** a light source **50,** and a reflector **60.** The polarizing plates **30, 30'** are placed so that polarization axes thereof are perpendicular to each other. The liquid crystal cell **10** includes a pair of glass substrates **11, 11'** and a liquid crystal layer **12** as a display medium placed between the substrates. One glass substrate **11** is provided with a switching element (typically, TFT) for controlling the electrooptical properties of liquid crystals, a scanning line for providing a gate signal to the switching element, and a signal line for providing a source signal to the switching element (all of them are not shown). The other glass substrate **11'** is provided with a color layer forming a color filter and a shielding layer (black matrix layer) (both of them are not shown). A distance (cell gap) between the substrates **11** and **11'** is controlled by a spacer **13.** In the liquid crystal display apparatus of the present invention, the polarizing plate of the present invention described above is employed as at least one of the polarizing plates **30** and **30'.**

For example, in a case of the liquid crystal display apparatus **100** employing a TN mode, liquid crystal molecules of the liquid crystal layer **12** are aligned in a state with respective polarization axes being shifted by 90° during application of no voltage. In such a state, injected light including light in one direction transmitted through the polarizing plate is twisted by 90° by the liquid crystal molecules. As described above, the polarizing plates are arranged such that the respective polarization axes are perpendicular to each other, and thus light (polarized light) reaching the other polarizing plate transmits through the polarizing plate. Thus, during application of no voltage, the liquid crystal display apparatus **100** provides a white display (normally white mode). Meanwhile, in a case where a voltage is applied onto the liquid crystal display apparatus **100,** alignment of the liquid crystal molecules in the liquid crystal layer **12** changes. As a result, the light (polarized light) reaching the other polarizing plate cannot transmit through the polarizing plate, and a black display is provided. Displays are switched as described above by pixel by using the active element, to thereby form an image.

Hereinafter, the present invention will be described specifically by way of examples but the present invention is not limited to those examples. The evaluation was conducted as follows.

<Measurement of thickness>

In a case where the thickness is less than 10 μm, the thickness was measured with a spectrophotometer for a thin film ("Instantaneous multi-channel photodetection system MCPD-2000" (trade name) manufactured by Otsuka Electrical Co., Ltd.). In a case where the thickness is 10 μm or more, the thickness was measured using a digital micrometer "KC-351C type" manufactured by Anritsu Co., Ltd.

<Weight average molecular weight>

The weight average molecular weight was measured by a polystyrene conversion using Shodex GPC system-21H manufactured by Showa Denko K.K.

<Tg (glass transition temperature, which may be referred to as Tg)>

A precipitate obtained by dissolving a polymer once in tetrahydrofuran, placing it in excessive hexane to reprecipitate it, followed by filtering, was dried under a reduced pressure (1 mmHg (1.33 hPa), three or more hours), whereby a volatile component was removed. Then, the obtained resin was measured for Tg using a DSC apparatus (DSC 8230 manufactured by Rigaku Co., Ltd.). A transparent resin layer or a film were cut minutely in accordance with a measurement cell dimensional, and measured for Tg without conducting the above reprecipitation operation.

<Dealcoholization reaction rate (lactone cyclization ratio)>

The dealcoholization reaction rate was obtained from the decrease in weight due to the dealcoholization reaction from 150°C where the decrease in weight started to 300°C where the decomposition of the polymer started in dynamic TG measurement, based on the amount of decrease of weight occurring when all the hydroxyl groups were dealcoholized from the polymer composition obtained by polymerization.

More specifically, the decrease in weight from 150°C to 300°C in dynamic TG measurement of a polymer having a lactone ring structure is measured, and the obtained actually measured decrease ratio of weight is assumed to be (X). On the other hand, the theoretical decrease ratio of weight (i.e., weight decrease ratio calculated assuming that 100% dealcoholization occurs on the composition) when it is assumed that all the hydroxyl groups contained in the polymer composition becomes alcohol so as to participate in the formation of a lactone ring to be dealcoholized is assumed to be (Y). More specifically, the theoretical decrease ratio of weight (Y) can be calculated from the molar ratio of a material monomer having a structure (hydroxyl group) participating in the dealcoholization reaction in the polymer, i.e., the content of the material monomer in the polymer composition. These values (X, Y) are substituted in a dealcoholization calculation equation:

$$1 - (\text{actually measured decrease in weight (X)}/\text{theoretical decrease in weight (Y)})$$

to obtain a value, and the value is represented by %, whereby a dealcoholization reaction rate (lactone cyclization ratio) is obtained.

<Melt flow rate>

The melt flow rate was measured at a test temperature of 240°C and a load of 10 kg based on JIS-K6874.

<Pencil hardness>

The pencil hardness was measured in accordance with JIS 5600.

<Evaluation of external appearance: defects of unevenness>

The number of defects of unevenness of 30 μm or more present per 2 $m^2$ of a polarizing plate was counted.

(Production Example 1: Production of polarizer)

A polyvinyl alcohol film with a thickness of 80 μm was dyed in 5% by weight of an iodine aqueous solution (weight ratio: iodine/potassium iodide = 1/10). Then, the resultant polyvinyl alcohol film was soaked in an aqueous solution containing 3% by weight of boric acid and 2% by weight of potassium iodide. Further, the polyvinyl alcohol film was stretched 6.0-fold in an aqueous solution containing 4% by weight of boric acid and 3% by weight of potassium iodide, and thereafter, soaked in 5% by weight of an aqueous solution of potassium iodide. After that, the resultant polyvinyl alcohol film was dried in an oven at 40°C for 3 minutes, whereby a polarizer with a thickness of 30 μm was obtained.

(Production Example 2: Production of acrylic resin film containing lactone ring having lactone cyclization ratio of 20%)

To a 30-L reaction vessel equipped with a stirring apparatus, a temperature sensor, a cooling tube, and a nitrogen introduction tube, 8,000 g of methyl methacrylate (MMA), 2,000 g of methyl 2-(hydroxymethl)acrylate (MHMA), 10,000 g of 4-methyl-2-pentanone (methylisobutylketone, MIBK), and 5 g of n-dodecylmercaptane were charged, and

the mixture thus obtained was raised in temperature to 105°C while nitrogen was being passed in the vessel, whereby the mixture was refluxed. At this time, while 5.0 g of tert-butyl peroxy isopropyl carbonate (Kayacarbon Bic-75 (trade name) manufactured by Kayaku Akzo Corporation) was added as an initiator, and a solution formed of 10.0 g of tert-butyl peroxy isopropyl carbonate and 230 g of MIBK was dropped over 4 hours, a solution polymerization was conducted under refluxing (about 105°C to 120°C), and aging was conducted further over 4 hours.

To the obtained polymer solution, 30 g of stearyl phosphate/distearyl phosphate mixture (Phoslex A-19 (trade name) manufactured by Sakai Chemical Industrial Co., Ltd.) was added, and a cyclization condensation reaction was conducted for 5 hours under refluxing (about 90°C to 120°C). Then, the polymer solution obtained by the above cyclization condensation reaction was introduced into a bent-type screw biaxial extruder ($\Phi$ = 29.75 mm, L/D = 30) with one rear bent and four front bents at a barrel temperature of 260°C, a rotation number of 100 rpm, a decompression degree of 13.3 hPa (10 to 300 mmHg) at a processing rate of 2.0 kg/hour in terms of a resin amount conversion. A cyclization condensation reaction and degassing were performed in the extruder, and the polymer solution was extruded, whereby a transparent pellet of an acrylic resin containing a lactone ring was obtained.

The lactone cyclization ratio of the pellet of an acrylic resin containing a lactone ring was 20%, the weight average molecular weight thereof was 156,000, the melt flow rate thereof was 3.9 g/10 minutes, and Tg (glass transition temperature) thereof was 123°C.

The acrylic resin containing a lactone ring obtained above was supplied to an extruder, melt-kneaded at 250°C, extruded from a T-die, cooled with a cooling roll, and taken up. After that, the resultant resin was stretched with a sequential biaxial extruder to obtain an optical film (1) (lactone cyclization ratio: 20%) with a thickness of 60 $\mu$m.

The pencil hardness of the optical film (1) was 2B.

(Production Example 3: Production of an acrylic resin film containing a lactone ring with a lactone cyclization ratio of 25%)

An optical film (2) (lactone cyclization ratio: 25%) was obtained in the identical way as in Production Example 2, except that 7,500 g of methyl metharylate (MMA) and 2,500 g of methyl 2-(hydroxymethyl) acrylate (MHMA) were used instead of 8,000 g of methyl methacrylate (MMA) and 2,000 g of methyl 2-(hydroxymethl)acrylate (MHMA), respectively.

The pencil hardness of the optical film (2) was B.

(Production Example 4: Production of an acrylic resin film containing a lactone ring with a lactone cyclization ratio of 35%)

An optical film (3) (lactone cyclization ratio: 35%) was obtained in the identical way as in Production Example 2, except that 6,500 g of methyl metharylate (MMA) and 3,500 g of methyl 2-(hydroxymethyl) acrylate (MHMA) were used instead of 8,000 g of methyl methacrylate (MMA) and 2,000 g of methyl 2-(hydroxymethl)acrylate (MHMA), respectively.

The pencil hardness of the optical film (3) was H.

(Production Example 5: Production of an acrylic resin film containing a lactone ring with a lactone cyclization ratio of 43%)

An optical film (4) (lactone cyclization ratio: 43%) was obtained in the identical way as in Production Example 2, except that 5,700 g of methyl metharylate (MMA) and 4,300 g of methyl 2-(hydroxymethyl) acrylate (MHMA) were used instead of 8,000 g of methyl methacrylate (MMA) and 2,000 g of methyl 2-(hydroxymethl)acrylate (MHMA), respectively.

The pencil hardness of the optical film (4) was 2H.

(Production Example 6: Production of methyl methacrylate resin film)

To a 30-L reaction vessel equipped with a stirring apparatus, a temperature sensor, a cooling tube, and a nitrogen introduction tube, 10,000 g of methyl methacrylate (MMA), 10,000 g of 4-methyl-2-pentanone (methylisobutylketone, MIBK), and 5 g of n-dodecylmercaptane were charged, and the mixture thus obtained was raised in temperature to 105°C while nitrogen was being passed in the vessel, whereby the mixture was refluxed. At this time, while 5.0 g of tert-butyl peroxy isopropyl carbonate (Kayacarbon Bic-75 (trade name) manufactured by Kayaku Akzo Corporation) was added as an initiator, and a solution formed of 10.0 g of tert-butyl peroxy isopropyl carbonate and 230 g of MIBK was dropped over 4 hours, a solution polymerization was conducted under refluxing (about 105°C to 120°C), and aging was conducted further over 4 hours.

To the obtained polymer solution, 30 g of stearyl phosphate/distearyl phosphate mixture (Phoslex A-19 (trade name) manufactured by Sakai Chemical Industrial Co., Ltd.) was added, and a reaction was conducted for 5 hours under refluxing (about 90°C to 120°C). Then, the polymer solution obtained by the above cyclization condensation reaction

was introduced into a bent-type screw biaxial extruder (Φ = 29.75 mm, L/D = 30) with one rear bent and four front bents at a barrel temperature of 260°C, a rotation number of 100 rpm, a decompression degree of 13.3 hPa (10 to 300 mmHg) at a processing rate of 2.0 kg/time in terms of a resin amount conversion. A degassing was performed in the extruder, and the polymer solution was extruded, whereby a transparent pellet of methyl methacrylate resin was obtained.

The methyl methacrylate resin obtained above was supplied to an extruder, melt-kneaded at 220°C, extruded from a T-die, cooled with a cooling roll, and taken up. After that, the resultant resin was stretched with a sequential biaxial extruder to obtain an optical film (5) with a thickness of 60 μm.

The pencil hardness of the optical film (5) was 4B.

(Production Example 7: Preparation of a polyvinyl alcohol-based adhesive aqueous solution)

Aqueous solutions containing 20 parts by weight of methylol melamine with respect to 100 parts by weight of a polyvinyl alcohol resin denatured with an acetoacetyl group (acetylation degree: 13%) were adjusted so that the concentration became 2.8% by weight, 3.2% by weight, 3.5% by weight, and 4.2% by weight, whereby 4 kinds of polyvinyl alcohol-based adhesive aqueous solutions having different concentrations were prepared.

(Example 1)

The optical films (2) (pencil hardness B) obtained in Production Example 3 were attached to both surfaces of the polarizer obtained in Production Example 1 to produce a polarizing plate (1). At this time, the polyvinyl alcohol-based adhesive (concentration: 3.5% by weight) obtained in Production Example 7 was applied onto the attachment surface of the optical film (2) with respect to the polarizer, and the optical films (2) were contact-bonded so as to sandwich the polarizer from both sides thereof with a lamination roll.
Table 1 shows the thickness of the adhesive layer and the external appearance evaluation results of the polarizing plate (1).

(Example 2)

The optical films (3) (pencil hardness H) obtained in Production Example 4 were attached to both surfaces of the polarizer obtained in Production Example 1 to produce a polarizing plate (2). At this time, the polyvinyl alcohol-based adhesive (concentration: 4.2% by weight) obtained in Production Example 7 was applied onto the attachment surface of the optical film (3) with respect to the polarizer, and the optical films (3) were contact-bonded so as to sandwich the polarizer from both sides thereof with a lamination roll.

Table 1 shows the thickness of the adhesive layer and the external appearance evaluation results of the polarizing plate (2).

(Example 3)

The optical films (4) (pencil hardness 2H) obtained in Production Example 5 were attached to both surfaces of the polarizer obtained in Production Example 1 to produce a polarizing plate (3). At this time, the polyvinyl alcohol-based adhesive (concentration: 4.2% by weight) obtained in Production Example 7 was applied onto the attachment surface of the optical film (4) with respect to the polarizer, and the optical films (4) were contact-bonded so as to sandwich the polarizer from both sides thereof with a lamination roll.

Table 1 shows the thickness of the adhesive layer and the external appearance evaluation results of the polarizing plate (3).

(Comparative Example 1)

The optical films (5) (pencil hardness 4B) obtained in Production Example 6 were attached to both surfaces of the polarizer obtained in Production Example 1 to produce a polarizing plate (C1). At this time, the polyvinyl alcohol-based adhesive (concentration: 3.2% by weight) obtained in Production Example 7 was applied onto the attachment surface of the optical film (5) with respect to the polarizer, and the optical films (5) were contact-bonded so as to sandwich the polarizer from both sides thereof with a lamination roll.

Table 1 shows the thickness of the adhesive layer and the external appearance evaluation results of the polarizing plate (C1).

(Comparative Example 2)

The optical films (1) (pencil hardness 2B) obtained in Production Example 2 were attached to both surfaces of the polarizer obtained in Production Example 1 to produce a polarizing plate (C2). At this time, the polyvinyl alcohol-based adhesive (concentration: 2.8% by weight) obtained in Production Example 7 was applied onto the attachment surface of the optical film (1) with respect to the polarizer, and the optical films (1) were contact-bonded so as to sandwich the polarizer from both sides thereof with a lamination roll.
Table 1 shows the thickness of the adhesive layer and the external appearance evaluation results of the polarizing plate (C2).

(Comparative Example 3)

The optical films (3) (pencil hardness H) obtained in Production Example 4 were attached to both surfaces of the polarizer obtained in Production Example 1 to produce a polarizing plate (C3). At this time, the polyvinyl alcohol-based adhesive (concentration: 2.8% by weight) obtained in Production Example 7 was applied onto the attachment surface of the optical film (3) with respect to the polarizer, and the optical films (3) were contact-bonded so as to sandwich the polarizer from both sides thereof with a lamination roll.
Table 1 shows the thickness of the adhesive layer and the external appearance evaluation results of the polarizing plate (C3).

(Comparative Example 4)

The optical films (2) (pencil hardness B) obtained in Production Example 3 were attached to both surfaces of the polarizer obtained in Production Example 1 to produce a polarizing plate (C4). At this time, the polyvinyl alcohol-based adhesive (concentration: 3.2% by weight) obtained in Production Example 7 was applied to the attachment surface of the optical film (2) with respect to the polarizer, and the optical films (2) were contact-bonded so as to sandwich the polarizer from both sides thereof with a lamination roll.
Table 1 shows the thickness of the adhesive layer and the external appearance evaluation results of the polarizing plate (C4).

(Comparative Example 5)

The optical films (1) (pencil hardness 2B) obtained in Production Example 2 were attached to both surfaces of the polarizer obtained in Production Example 1 to produce a polarizing plate (C5). At this time, the polyvinyl alcohol-based adhesive (concentration: 3.5% by weight) obtained in Production Example 7 was applied onto the attachment surface of the optical film (1) with respect to the polarizer, and the optical films (1) were contact-bonded so as to sandwich the polarizer from both sides thereof with a lamination roll.
Table 1 shows the thickness of the adhesive layer and the external appearance evaluation results of the polarizing plate (C5).

(Comparative Example 6)

The optical films (5) (pencil hardness 4B) obtained in Production Example 6 were attached to both surfaces of the polarizer obtained in Production Example 1 to produce a polarizing plate (C6). At this time, the polyvinyl alcohol-based adhesive (concentration: 4.2% by weight) obtained in Production Example 7 was applied onto the attachment surface of the optical film (5) with respect to the polarizer, and the optical films (5) were contact-bonded so as to sandwich the polarizer from both sides thereof with a lamination roll.
Table 1 shows the thickness of the adhesive layer and the external appearance evaluation results of the polarizing plate (C6).

Table 1

| | Pencil hardness of protective layer (optical film) | Thickness of adhesive layer (nm) | External appearance evaluation (defects of unevenness) of polarizing plate (piece) |
|---|---|---|---|
| Example 1 | B | 50 | 0 |

(continued)

| | Pencil hardness of protective layer (optical film) | Thickness of adhesive layer (nm) | External appearance evaluation (defects of unevenness) of polarizing plate (piece) |
|---|---|---|---|
| Example 2 | H | 70 | 0 |
| Example 3 | 2H | 70 | 1 |
| Comparative Example 1 | 4B | 40 | 61 |
| Comparative Example 2 | 2B | 30 | 44 |
| Comparative Example 3 | H | 30 | 22 |
| Comparative Example 4 | B | 40 | 20 |
| Comparative Example 5 | 2B | 50 | 36 |
| Comparative Example 6 | 4B | 70 | 54 |

As is understood from Table 1, the polarizing plate of the present invention has an extremely small number of defects of unevenness.

The polarizing plate obtained in the production method of the present invention can be preferably used in various kinds of image display apparatuses (liquid crystal display apparatus, organic EL display apparatus, PDP, etc.).

Many other modifications will be apparent to and be readily practiced by those skilled in the art without departing from the scope and spirit of the invention. It should therefore be understood that the scope of the appended claims is not intended to be limited by the details of the description but should rather be broadly construed.

## Claims

**1.** A polarizing plate, comprising:

a polarizer;
a protective layer (A) placed on at least one surface of the polarizer; and
an adhesive layer placed between the polarizer and the protective layer (A) and having a thickness of 50 to 150 nm,

wherein the protective layer (A) comprises a (meth)acrylic resin layer having a thickness of 1 to 50 $\mu$m with a surface hardness of B or more in terms of a pencil hardness.

**2.** A polarizing plate according to claim 1, wherein the (meth)acrylic resin layer contains 70 to 100% by weight of a (meth)acrylic resin.

**3.** A polarizing plate according to claim 2, wherein Tg (glass transition temperature) of the (meth)acrylic resin is 115°C to 170°C.

**4.** A polarizing plate according to claim 1, wherein the protective layer (A) is placed on both surfaces of the polarizer.

**5.** A polarizing plate according to claim 1, wherein the adhesive layer is formed of a polyvinyl alcohol-based adhesive.

**6.** A polarizing plate according to claim 1, wherein the polarizer and the protective layer (A) are attached to each other with a lamination roll.

**7.** A polarizing plate according to claim 1, further comprising a pressure-sensitive adhesive layer as at least one of an outermost layer.

**8.** An image display apparatus, comprising at least one polarizing plate according to any one of claims 1 to 7.

FIG. 1

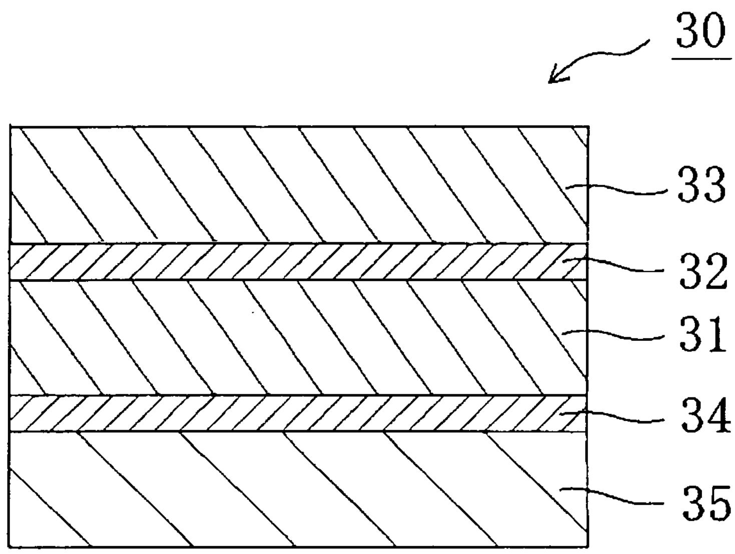

FIG. 2

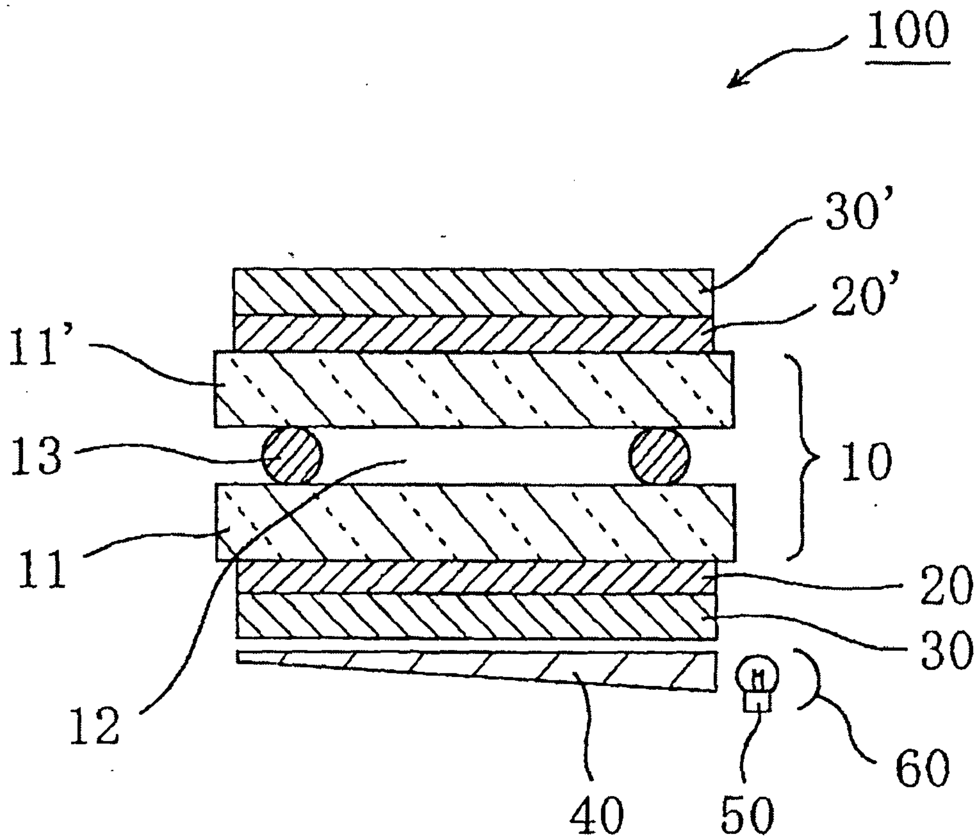

European Patent Office

# EUROPEAN SEARCH REPORT

Application Number
EP 07 02 3284

| Category | Citation of document with indication, where appropriate, of relevant passages | Relevant to claim | CLASSIFICATION OF THE APPLICATION (IPC) |
|---|---|---|---|
| Y | US 2006/019100 A1 (HATANAKA TAKEZOU [JP] ET AL) 26 January 2006 (2006-01-26) * paragraphs [0043], [0045], [0072], [0095], [0118]; figure 1; example 1 * | 1-8 | INV. G02B5/30 C08F255/00 |
| Y | US 2005/243245 A1 (TAGUCHI KEIICHI [JP] ET AL) 3 November 2005 (2005-11-03) * paragraphs [0069], [0204], [0205]; figure 1(b) * | 1,3-8 | |
| Y | US 2003/124338 A1 (INAGAKI MASASHI [JP] ET AL) 3 July 2003 (2003-07-03) * paragraphs [0064], [0115] * | 2 | |

TECHNICAL FIELDS SEARCHED (IPC)

G02B
C08F

The present search report has been drawn up for all claims

| Place of search | Date of completion of the search | Examiner |
|---|---|---|
| Munich | 25 March 2008 | Michel, Alain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 07 02 3284

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2008

| Patent document cited in search report | Publication date | Patent family member(s) | Publication date |
|---|---|---|---|
| US 2006019100 A1 | 26-01-2006 | CN 1659457 A<br>WO 03104862 A1 | 24-08-2005<br>18-12-2003 |
| US 2005243245 A1 | 03-11-2005 | JP 2005284246 A | 13-10-2005 |
| US 2003124338 A1 | 03-07-2003 | KR 20030014587 A | 19-02-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006345821 A
- JP 2006220732 A
- JP 2006065309 A
- JP 2004070296 A
- JP 2000230016 A
- JP 2001151814 A
- JP 2002120326 A
- JP 2002254544 A
- JP 2005146084 A
- JP 2001343529 A
- WO 0137007 A
- JP 1240517 A
- JP 3014882 A
- JP 3122137 A